# EUROPÄISCHE PATENTSCHRIFT

(11) **EP 0 571 708 B1**
(45) Veröffentlichungstag und Bekanntmachung des Hinweises auf die Patenterteilung: **22.11.1995**
(21) Anmeldenummer: 93101676.0
(22) Anmeldetag: 04.02.1993
(51) Int. Cl.: B01D 46/26, B03C 3/14

(54) **Vorrichtung und Verfahren zum Abscheiden von Fremdstoffen aus einem gasförmigen Medium**
Apparatus and process to remove pollutants from gases
Appareil et procédé pour éliminer des polluants de gaz

(30) Priorität: 16.05.1992 DE 4216313
(43) Veröffentlichungstag der Anmeldung: 01.12.1993
(73) Patentinhaber: H KRANTZ-TKT GmbH, D-51465 Bergisch Gladbach (DE)
(72) Erfinder: Horwedel, Hartwig-Karl, W-6839 Oberhausen (DE)
(74) Vertreter: Müller, Jürgen, Dipl.-Ing.

(56) Entgegenhaltungen:
- BE-A- 545 160
- DE-A- 3 528 042
- NL-A- 7 904 622
- US-A- 4 623 365

## Beschreibung

Die Erfindung betrifft eine Vorrichtung zum Abscheiden von Aerosolen, Gasen und Dämpfen aus einem gasförmigen Medium gemäß dem Oberbegriff des Patentanspruches 1 sowie ein Verfahren zum Abscheiden der Fremdstoffe und zum Abreinigen des Filterbettes.

In der NL-A-7 904 622 ist eine Vorrichtung zum Abscheiden von festen und/oder flüssigen Bestandteilen aus einem Gas beschrieben, die einen drehbar gelagerten Hohlzylinder enthält. Der Hohlzylinder weist zwischen perforierten Wände eine Füllung aus einem Kunststoffgranulat auf und wird von dem zu reinigenden Gas von außen nach innen durchströmt. Während des Abscheidevorganges wird der Hohlzylinder in Rotation versetzt, wodurch die abzuscheidenden Bestandteile aufgrund der Zentrifugalwirkung nach außen abgeführt werden. Derartige Rotationsfilter zeigen eine aufwendigen Bauweise und erfordern eine sorgfältige Bedienung und Wartung.

Aus der DE-A 30 12 911 ist ein Schüttgutfilter mit einem Filterelement bekannt, das ein stationäres, zwischen zwei perforierten Wände begrenztes Filterbett aus Sand oder Kunststoffgranulat enthält. Das Filterelement ist fest in ein Filtergehäuse eingebaut. Zur Abreinigung des Filters wird über ein in den Innenraum des Filterelementes ragendes Düsenrohr intermittierend Druckluft auf das Filterbett geblasen. Das Düsenrohr kann drehbar gelagert oder vertikal verschiebbar sein. Das bekannte Schüttgutfilter ist auf die Abtrennung von Staub aus einem staubhaltigen Rohgas ausgelegt und nur bedingt zur Abscheidung von Aerosolen geeignet. Eine Abscheidung von Gasen und Dämpfen ist mit diesem Filter wegen der fehlenden Möglichkeit, eine absorbierende Flüssigkeit einzugeben, nicht möglich. Eine Abreinigung von in der Filterschicht adsorbierten Fremdstoffen, vor allem wenn diese zum Verkleben oder Verharzen neigen, ist mit Druckluft nur sehr ineffektiv durchzuführen.

Die Abscheidung von Aerosolen aus einem Gasstrom unter Verwendung eines Silikatgranulates ist aus der DE-A 27 14 972 bekannt. Die Granulatschichten sind in quaderförmigen, mit perforierten Wänden versehenen Behältern untergebracht, die in mehreren Reihen neben- und übereinander in einem Filtergehäuse angeordnet sind. Zur Abreinigung werden die Granulatschichten entgegen der Strömungsrichtung des zu reinigenden Gases mit Heißluft oder Dampf durchblasen. Eine Regenerierung der Filterschicht mit Heißluft oder Dampf ist sehr energieaufwendig. Durch die Absorption von Fremdstoffen bei Regenerierung mit Dampf können diese Fremdstoffe nur verdünnt wiedergewonnen werden. Der notwendige Austausch der Granulatschichten steigert den Betriebskosten- und Wartungsaufwand erheblich. Der aufwendige Aufbau des Abscheiders führt zu häufigen Betriebsstörungen und Betriebsausfällen.

In der DE-A 24 33 934 ist ein Filter zur Reinigung von staubhaltigem Rohgas beschrieben. Das Filter besteht aus einer drehbaren Filtertrommel, die mit einem Filterstoff bespannt ist, auf dem sich der aus dem Rohgas abgeschiedene Staub ablagert. Das gereinigte Gas wird über die hohle Welle der Filtertrommel abgeführt. Das Filter wird dadurch abgereinigt, daß auf die Innenseite der Filtertrommel eine Flüssigkeit aufgesprüht und die Filtertrommel gedreht wird, so daß der Filterkuchen abgeschleudert wird. Durch die Bespannung mit Filterstoff ist keine so effektive Adsorptionswirkung wie die einer in der Tiefe adsorbierenden Schüttschicht möglich. In der das Reingas abführende Hohlwelle stellen sich aufgrund des geringen Durchmessers hohe Strömungsgeschwindigkeiten, die einen hohen Strömungs- und Druckverlust mit sich bringen. Bei geringen Volumenströmen, die diesen Nachteil kompensieren würden, baut das Filter im Verhältnis des dann geringen angesaugten Volumenstromes sehr groß.

Aus der EP-A 35 973 ist ein Staubabscheider mit einem Filterbett aus körnigem Filtermaterial bekannt, bei dem der Abscheidegrad durch das Anlegen einer nicht getakteten, d. h. kontinuierlich verlaufenden Gleichspannung verbessert wird. Dabei werden die Pole in verschiedenen Varianten an die Innenwand, die Außenwand oder einen das Filterbett umgebenden zylindrischen Mantel gelegt. Das Anlegen einer solchen kontinuierlich verlaufenden Gleichspannung trifft keine Vorsorge gegen das Auftreten von Spannungsüberschlägen. Es kann daher nur mit einer vergleichsweise niedrigen Spannung bei einem mäßigen Abscheidegrad gearbeitet werden. Der bekannte Abscheider benötigt eine verhältnismäßig große Filterbettdicke von 25 bis 100 mm. Zur Abscheidung von Gasen und Dämpfen ist der Abscheider nicht geeignet, weil keine Möglichkeit besteht, ein Adsorptionsmittel zuzusetzen. Die Regeneration des Filterbettes erfolgt über einen Austausch des Filtermaterials, das über ein zentrales Förderrohr zu- und abgeführt wird. Aufgrund dieses Förderrohres baut der Abscheider sehr aufwendig und ist anfällig gegen Betriebsstörungen und Betriebsausfälle.

Der Erfindung liegt die Aufgabe zugrunde, eine für die Abscheidung von Aerosolen, Gasen und Dämpfen aus einem gasförmigen Medium geeignete Vorrichtung zu schaffen, die einfach im Aufbau und in der Bedienung ist und die ein geringes Gewicht und Bauvolumen aufweist.

Diese Aufgabe wird bei einer gattungsgemäßen Vorrichtung erfindungsgemäß durch die kennzeichnenden Merkmale des Patentanspruches 1 gelöst. Vorteilhafte Ausgestaltungen der Erfindung sind in den Unteransprüchen angegeben. Ein Verfahren zum Abscheiden von Aerosolen und zur Abreinigung des Filterbettes ist Gegenstand des Patentanspruches 10.

Bei Durchtritt des schadstoffbelasteten Mediums durch das Filterbett werden die Schadstoffe, insbesondere Aerosole an der Oberfläche des Granulats adsorbiert. Die Abreinigung des Filterbettes erfolgt durch Rotation des Filterelementes, wodurch aufgrund der auftretenden Zentrifugalkräfte die adsorbierten Schadstoffe ausgeschleudert und bei motorischem Antrieb des Filterelementes in unverdünnter Form zurückgewonnen werden. Die Abscheideleistung des Filterelementes kann durch Anlegen einer getakteten Gleichspannung verbessert werden.

Mehrere Ausführungsbeispiele der Erfindung sind in der Zeichnung dargestellt und werden im folgenden näher erläutert. Es zeigen:
Fig. 1 den Längsschnitt durch eine Vorrichtung zum Abscheiden von Fremdstoffen,

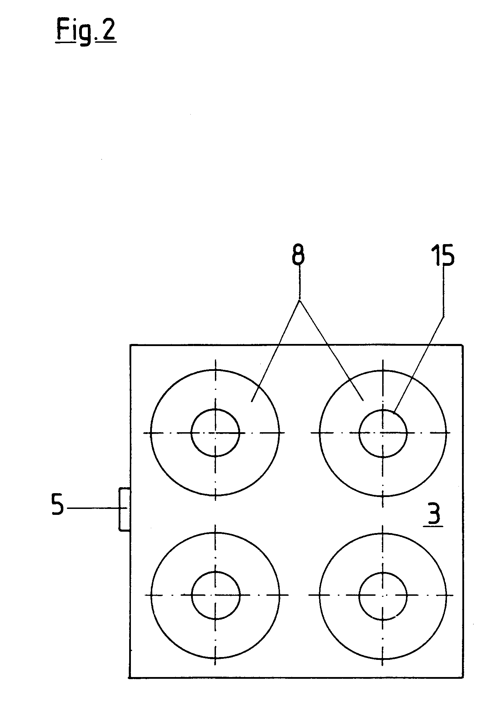

Fig. 2 die Draufsicht auf Fig. 1,
Fig. 3 ein einzelnes Filterelement und
Fig. 4 bis 6 jeweils einen Längsschnitt durch einen Abschnitt eines Filterelementes mit verschiedenen Anordnungen von Elektroden.

Ein Gehäuse 1 ist durch eine Trennwand 2 in einen Rohgasraum 3 und einen Reingasraum 4 aufgeteilt. Der Rohgasraum 3 ist mit einem Einlaßstutzen 5 für die Zuführung eines Aerosole, Gase oder Dämpfe enthaltenden gasförmigen Mediums und der Reingasraum 4 ist mit einem Auslaßstutzen 6 für die Abführung des von den Fremdstoffen befreiten Mediums versehen. In dem Boden des Rohgasraumes 3 ist ein Abführungsstutzen 7 angeordnet, durch den die abgeschiedenen Fremdstoffe abgezogen werden.

In dem Rohgasraum 3 sind ein oder mehrere Filterelemente 8 angeordnet. Jedes Filterelement 8 besteht aus einem Hohlzylinder und enthält zwei mit Abstand voneinander angeordnete, perforierte Wände 9, 10, die ein ringförmiges Filterbett 11 begrenzen. Anstelle eines kreisförmigen Querschnittes kann das Filterelement 8 auch einen Querschnitt aufweisen, der die Form eines Polyeders hat. Der ringförmige, von den perforierten Wänden 9, 10 umschlossene Hohlraum ist an der oberen und unteren Stirnfläche geschlossen. Die untere Stirnfläche ist Teil einer Bodenplatte 12, die den unteren Abschluß des Filterelementes 8 darstellt. In dem oberen Bereich sind die Wände 9, 10 gasundurchlässig und begrenzen einen Ausdehnungsraum 13, in den das Filterbett 11 hineinreicht, ohne ihn auszufüllen.

Die Bodenplatte 12 und die innere perforierte Wand 9 des Filterelementes 8 begrenzen einen Innenraum 14, dessen oberes Ende in einen Austrittsstutzen 15 übergeht. Der Austrittsstutzen 15 ragt mit einem nach außen weisenden Kragen 16 in den Reingasraum 4 hinein. An der Durchtrittsstelle des Austrittsstutzens 15 durch die Trennwand 2 ist eine elastische Membran 17 angebracht, die den Austrittsstutzen 15 mit geringem Abstand umgibt und die dicht mit der Trennwand 2 verbunden ist. Der innere Umfang des kreisringförmigen Ausschnittes der Membran 17 ist größer als der Außenumfang des Austrittsstutzens 15 und kleiner als der Außenumfang des Kragens 16. Besteht zwischen dem Reingasraum 4 und dem Rohgasraum 3 eine Druckdifferenz, so legt sich die Membran 17 von unten an den Kragen 16 an. Herrscht beiderseits der Trennwand 2 Druckausgleich, so hebt die Membran 17 ab, und es entsteht ein freier Spalt zwischen der Membran 17 und dem Austrittsstutzen 15. Alternativ kann für die beschriebene Abdichtung auch eine am Austrittsstutzen 15 in jeder Betriebsphase anliegende Dichtung verwendet werden.

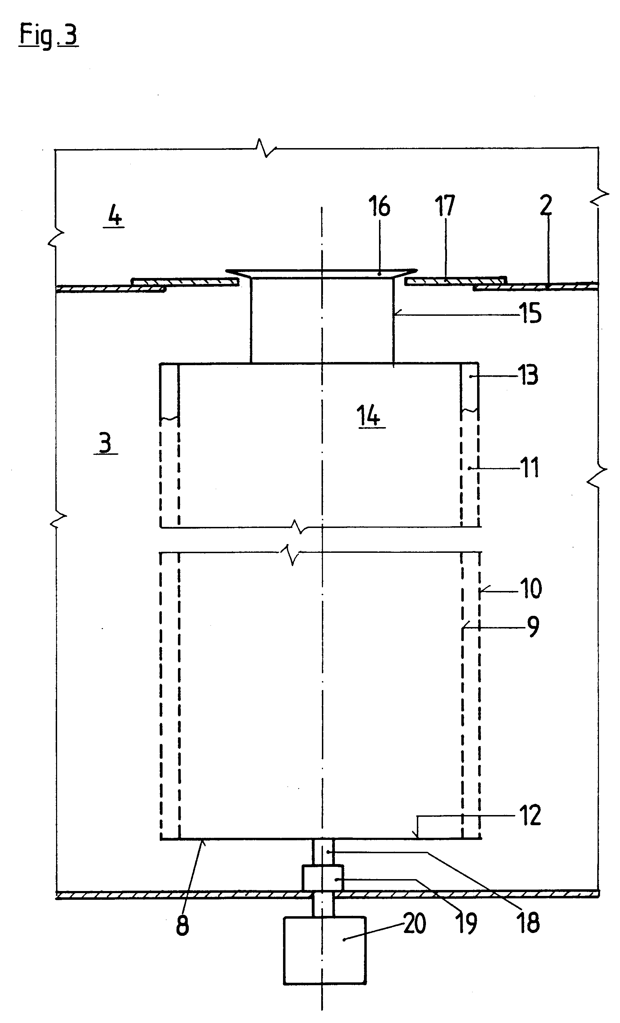

Das Filterelement 8 ist drehbar gelagert und weist vorzugsweise einen Wellenzapfen 18 auf, der an der Bodenplatte 12 befestigt ist. Der Wellenzapfen 18 ist in einem Lager 19 elastisch gelagert, das auf dem Boden des Rohgasraumes 3 aufsteht. Gemäß Fig. 3 ist der Wellenzapfen 18 vorzugsweise durch den Boden des Rohgasraumes 3 hindurchgeführt und mit einem motorischen Antrieb 20 verbunden. Über den Antrieb 20, der vorzugsweise als Elektromotor ausgebildet ist, kann das Filterelement 8 in Rotation versetzt werden.

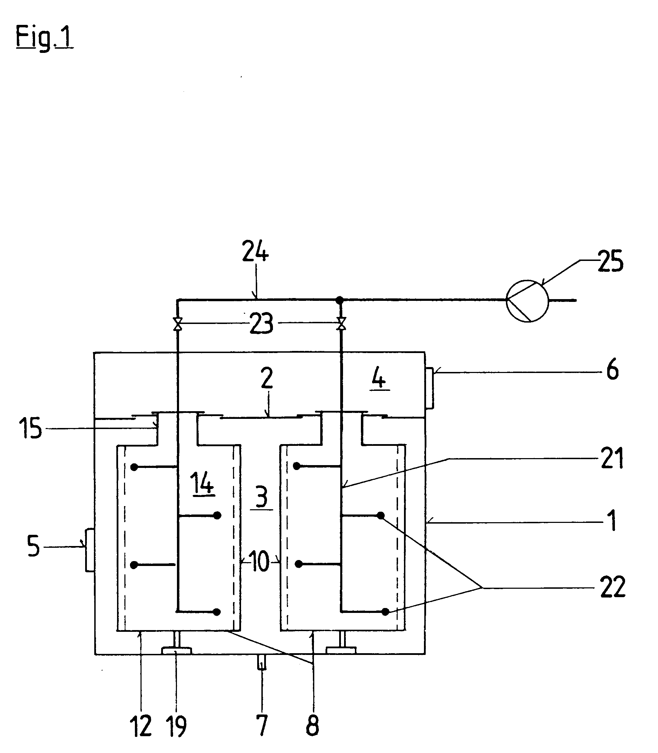

Gemäß Fig. 1 wird die Rotation des Filterelementes 8 durch eine Fluidströmung bewirkt, die tangential auf die innere Wand 9, die äußere Wand 10 oder auf entsprechende Einbauten oder Anbauten des Filterelementes 8 gerichtet ist. Zu diesem Zweck ragt vorzugsweise durch den Austrittsstutzen 15 ein Zuleitungsrohr 21 in den Innenraum 14 des Filterelementes 8 hinein. An das Zuleitungsrohr 21 sind eine oder mehrere feststehende oder räumlich verstellbare Düsen 22 angeschlossen, die über die Höhe des Innenraumes 14 verteilt angeordnet sind und deren Austrittsachsen tangential auf die innere Wand 9, die äußere Wand 10 oder die An- und Einbauten gerichtet sind. Die Zuleitungsrohre 21 treten durch den Reingasraum 4 nach außen und sind mit durch Ventile 23 absperrbaren Zuführungsleitungen 24 verbunden. In die Zuführungsleitungen 24 wird über eine Pumpe 25 eine Flüssigkeit eingespeist. Durch die Ventile 23 können die Filterelemente 8 in beliebiger Reihenfolge oder Kombination angeströmt werden. Damit lassen sich mehrere Filterelemente 8 durch eine Antriebseinheit z. B. über eine Pumpe 25 antreiben.

Die beschriebene Vorrichtung eignet sich besonders zur Abscheidung von Kühlschmierstoff-Nebel aus Abluft. Diese Nebel können zum Verkleben und Verharzen neigen. Das Filterbett 11 ist durch eine ruhende Schüttung aus einem Schüttgut, vorzugsweise aus Kunststoffgranulat von einheitlicher Gestalt gebildet. Das Kunststoffgranulat besitzt eine geschlossene glatte Oberfläche und verhindert so ein zu starkes Festsetzen der adsorbierten Fremdstoffe. Weiterhin läßt sich durch eine geeignete Auswahl des Kunststoffes die Beständigkeit gegen Chemikalien und die Brauch- und Wärmebeständigkeit sowie das Brauchverhalten beeinflussen. Das Kunststoffgranulat kann aus kleinen Zylindern mit einem Durchmesser von 2,4 mm und einer Höhe von 3,5 mm bestehen. Unter Verwendung eines solchen Kunststoffgranulats beträgt der Abstand der perforierten Wände 9, 10 voneinander und damit die Dicke des Filterbettes 20 mm. Ein solches Filterelement 8 baut bei gutem Abscheidegrad klein.

Das gasförmige, mit Aerosolen beladene Medium wird durch den Einlaßstutzen 5 in den Rohgasraum 3 eingeführt. Das Medium durchdringt bei stillstehenden Filterelementen 8 das Filterbett 11, wobei die Aerosole an der Oberfläche des Granulats adsorbiert werden. Das von den Aerosolen befreite Medium tritt aus dem Innenraum 14 des Filterelementes 8 durch dessen Austrittsstutzen 15 in den Reingasraum 4 aus, aus dem es über den Auslaßstutzen 6 abgeführt wird. Da der Druck im Reingasraum 4 geringer ist als im Rohgasraum 3 legt sich die Membran 17 dichtend an den Kragen 16 an. Soll außer Nebel auch Gas oder Dampf abgeschieden werden, so wird in das eintretende Medium eine Flüssigkeit eingesprüht. In diesem Fall wird an der Oberfläche des Granulats das von der Flüssigkeit adsorbierte Gas oder der kondensierte Dampf adsorbiert.

Die Abscheideleistung kann mit Anlegen einer Hochspannung an das Filterelement 8 verbessert werden. Die Hochspannung besitzt die Form einer Gleichspannung. Sie ist getaktet, d.h. der Spannungsverlauf wird in kurzen Zeitabständen unterbrochen. Mit der getakteten Gleichspannung werden sich bildende Spannungsüberschläge immer wieder abgebrochen oder in ihrer Aufbauphase verhindert, so daß höhere Spannungen angelegt werden können als bei einer kontinuierlich anstehenden Gleichspannung. Da der Abscheidegrad mit der Höhe der angelegten Spannung steigt, lassen sich mit der getakteten Gleichspannung höhere Abscheidegrade erzielen als das bei einer kontinuierlich anstehenden Spannung der Fall wäre.

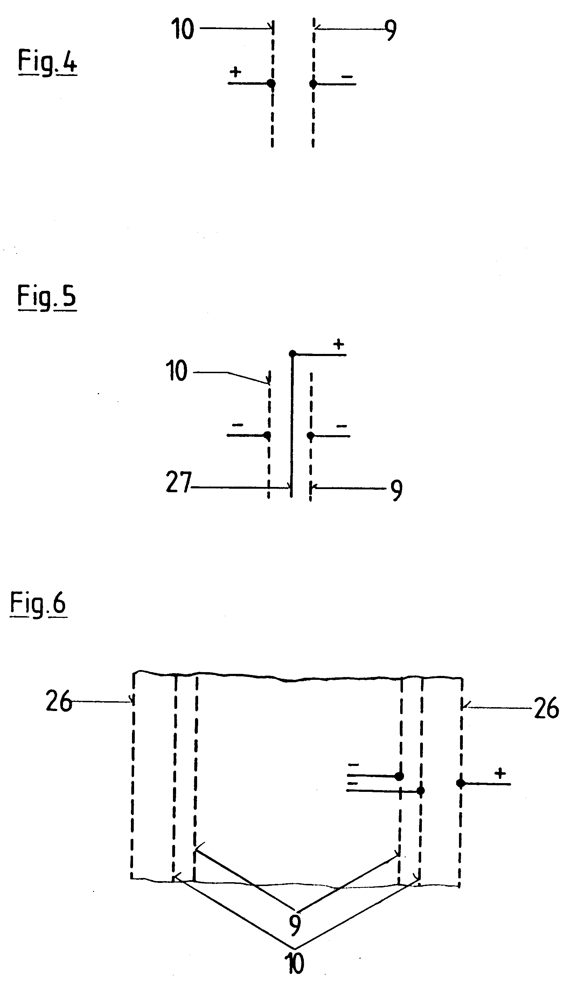

Die getaktete Hochspannung wird, wie in Fig. 4 gezeigt, mit jeweils einem Pol an die innere Wand 9 und die äußere Wand 10 des Filterelementes 8 angelegt und erzeugt eine elektrische Feldwirkung. Die Wände sind durch Isolierung an Verbindungsstellen und durch elektrisch genügend schlecht leitendes Schüttgut gegeneinander elektrisch isoliert.

Bei einer entsprechenden Vergrößerung des Abstandes zwischen der inneren Wand 9 und der äußeren Wand 10 kann auch, wie in Fig. 5 gezeigt, ein Pol als über den Umfang des Filterelementes 8 verteilte Leiter 27, wie elektrisch leitende Drähte oder dünne elektrisch leitende Stangen eingebracht werden. Die Polung der Leiter 27 kann abwechselnd als Pluspol und Minuspol oder einer anderen Abfolge variiert werden.

Weisen die aus dem beladenen Medium abzuscheidenden Fremdstoffe eine hohe elektrische Leitfähigkeit auf, so wird ein Pol vorzugsweise als ein das Filterelement 8 in genügend großem Abstand umgebender, elektrisch leitender zylindrischer oder polyedrischer Mantel 26 ausgeführt. Dieser Mantel 26 muß eine genügend große freie Durchströmfläche aufweisen, um das Durchströmen des Mediums nicht übermäßig zu behindern. Der zweite Pol liegt bei dieser Variante auf der inneren Wand 9 und/oder der äußeren Wand 10 des Filterelementes 8. Mit dieser Variante lassen sich besonders gut Aerosole abscheiden, die eine hohe elektrische Leitfähigkeit besitzen. Durch eine elektrisch isolierende Wirkung des zwischen dem als Elektrode dienenden Mantel 26 und dem Filterelement 8 befindlichen gasförmigen Mediums lassen sich Spannungsüberschläge wirksam vermeiden. Die in Fig. 3, 4 und 5 dargestellten Varianten können beliebig kombiniert werden.

Zur Abreinigung des Filterbettes 11 wird nach einer Abschaltung der Zufuhr und der Abfuhr des Mediums ein Druckausgleich zwischen dem Rohgasraum 3 und dem Reingasraum 4 hergestellt. Dadurch hebt die Membran 17 von dem Kragen 16 ab und gibt das Filterelement 8 frei. Bei der Variante mit der ständig fest anliegenden Dichtung braucht die Zufuhr und die Abfuhr des Mediums nicht unterbrochen zu werden. Danach werden die Filterelemente 8 in Rotation versetzt, wodurch aufgrund der auftretenden Zentrifugalkräfte die Adsorbate aus dem Filterbett 11 herausgeschleudert werden. Die Adsorbate sammeln sich in dem Rohgasraum 3 an, aus dem sie über den Abführungsstutzen 7 abgezogen werden. Sofern keine zusätzliche Flüssigkeit in das Gehäuse 1 eingegeben wird, fällt bei der Abreinigung das abgeschiedene Adsorbat in unverdünnter Form an und kann ohne Aufbereitung wiederverwendet werden. Bei der Rotation des Filterelementes 8 dringt die Granulatschüttung des Filterbettes 11 in den Ausdehnungsraum 13 ein. Durch diese Möglichkeit der Granulatschüttung, sich bei der Rotation des Filterelementes 8 auszudehnen, lockert sich bei der Abreinigung die Filterschicht auf. Dadurch wird ein Austreten der adsorbierten Fremdstoffe erleichtert. Weiterhin treten bei dem Auflockerungsvorgang durch Reibung und Aufreißen von Verklebungen positive Mechanismen in Kraft, die die Effektivität der Abreinigung steigern.

## Patentansprüche

1. Vorrichtung zum Abscheiden von Aerosolen, Gasen und Dämpfen aus einem gasförmigen Medium bestehend aus einem oder mehreren Filterelementen (8), die innerhalb eines durch eine Trennwand (2) in einen Rohgasraum (3) und einen Reingasraum (4) aufgeteilten Gehäuses (1) angeordnet sind und die jeweils zwei perforierte und mit Abstand voneinander angeordnete Wände (9, 10) aufweisen, die ein ringförmiges, an den Stirnseiten geschlossenes, ruhendes Filterbett (11) aus einem Granulat begrenzen, wobei der Innenraum (14) des Filterelementes (8) mit dem Reingasraum (4) in Verbindung steht, das Filterelement (8) drehbar gelagert und mit einem Austrittsstutzen (15) versehen ist, dadurch gekennzeichnet, daß der Austrittsstutzen (15) abgedichtet durch die Trennwand (2) zwischen Rohgasraum (3) und Reingasraum (4) hindurchgeführt ist und daß die Abdichtung aus einer elastischen Membran (17) besteht, die den Austrittsstutzen (15) des Filterelementes (8) mit radialem Abstand umgibt und die sich unter der Wirkung einer Druckdifferenz zwischen Rohgasraum (3) und Reingasraum (4) an einen Kragen (16) des Austrittsstutzens (15) anlegt.

2. Vorrichtung nach Anspruch 1, dadurch gekennzeichnet, daß das Filterelement (8) mit einem motorischem Antrieb (20) versehen ist.

3. Vorrichtung nach Anspruch 1, dadurch gekennzeichnet, daß in den Innenraum (14) des Filterelementes (8) ein Zuleitungsrohr (21) für ein Fluid hineinragt, das mit einer oder mehreren über die Höhe verteilt angeordneten Düsen (22) versehen ist, deren Austrittsachsen tangential auf das Filterbett (11) gerichtet sind.

4. Vorrichtung nach Anspruch 3, dadurch gekennzeichnet, daß in dem Zuleitungsrohr (21) ein Ventil (23) angeordnet ist und daß die Zuleitungsrohre (21) mehrerer Filterelemente (8) an gemeinsame Pumpe (25) angeschlossen sind.

5. Vorrichtung nach einem oder mehreren des Ansprüche 1 bis 4, dadurch gekennzeichnet, daß die perforierten Wände (9, 10) im oberen Bereich gasundurchlässig sind und daß das Filterbett (11) bei stillstehendem Filterelement (8) den gasundurchlässigen Bereich teilweise und bei rotierendem Filterelement (8) vollständig ausfüllt.

6. Vorrichtung nach einem oder mehreren der Ansprüche 1 bis 5, dadurch gekennzeichnet, daß an die innere Wand (9) und die äußere Wand (10) des Filterelementes (8) jeweils ein Pol einer getakteten Hochspannung angelegt ist.

7. Vorrichtung nach einem oder mehreren der Ansprüche 1 bis 5, dadurch gekennzeichnet, daß zwischen der inneren und der äußeren Wand (9, 10) elektrische Leiter (27) angeordnet sind, die gleich oder in beliebiger Reihenfolge abwechselnd gepolt sind und daß die innere und/oder die äußere Wand (9, 10) an einen Pol angeschlossen sind.

8. Vorrichtung nach einem oder mehreren der Ansprüche 1 bis 5, dadurch gekennzeichnet, daß das Filterelement (8) in einem Abstand von einem ringförmigen Mantel (26) aus einem elektrisch leitenden Material und mit einer genügend großen freien Durchströmfläche umgeben ist und daß an diesem Mantel (26) ein, oder bei gegeneinander elektrisch isolierten Teilzonen, mehreren Pole einer getakteten Hochspannung anliegen.

9. Verfahren zum Abscheiden von Aerosolen, Gasen und Dämpfen aus einem gasförmigen Medium unter Verwendung einer Vorrichtung nach einem oder mehreren der Ansprüche 1 bis 8 und zum Abreinigen des Filterbettes, wobei das gasförmige Medium bei stillstehendem Filterelement quer durch das Filterbett geführt wird sowie nach einer Abschaltung der Zufuhr und der Abfuhr des gasförmigen Mediums ein Druckausgleich zwischen Rohgasraum und Reingasraum hergestellt und das Filterelement in Rotation versetzt wird.

## Claims

1. Device for the separation of aerosols, gases and vapours from a gaseous medium, consisting of one or more filter elements (8), which are arranged within a housing (1) divided up by a partition (2) into a raw gas chamber (3) and a pure gas chamber (4) and which each have two perforated walls (9, 10), which are arranged at a spacing from one another and bound an annular static filter bed (11), closed at the end faces, of a granulate, wherein the interior space (14) of the filter element (8) stands in connection with the pure gas chamber (4) and the filter element (8) is mounted to be rotatable and is provided with an outlet stub pipe (15), characterised thereby that the outlet stub pipe (15) is sealingly led through the partition (2) between raw gas chamber (3) and pure gas chamber (4) and that the sealing consists of an elastic diaphragm (17), which surrounds the outlet stub pipe (15) of the filter element (8) at a radial spacing and which bears on a collar (16) of the outlet stub pipe (15) under the effect of a pressure difference between raw gas chamber (3) and pure gas chamber (4).

2. Device according to claim 1, characterised thereby that the filter element (8) is provided with a motor drive (20).

3. Device according to claim 1, characterised that a feed pipe (21) for a fluid projects into the interior space (14) of the filter element (8) and is provided with one or more nozzles (22) which are arranged distributed over the height and the outlet axes of which are directed tangentially to the filter bed (11).

4. Device according to claim 3, characterised thereby that a valve (23) is arranged in the feed pipe (21) and that the feed pipes (21) of several filter elements (8) are connected to a common pump (25).

5. Device according to one or more of claims 1 to 4, characterised thereby that the perforated walls (9, 10) are gas-impermeable in the upper region and that the filter bed (11) fills the gas-impermeable region partly when the filter element (8) is stationary and fully when the filter element (8) is rotating.

6. Device according to one or more of claims 1 to 5, characterised thereby that a respective pole of a pulsed high voltage is placed against each of the inner wall (9) and the outer wall (10) of the filter element (8).

7. Device according to one or more of claims 1 to 5, characterised thereby that electrical conductors (27), which are alternately poled regularly or in any sequence, are arranged between the inner and the outer wall (9, 10) and that the inner and/or the outer wall (9, 10) is or are connected to one pole.

8. Device according to one or more of claims 1 to 5, characterised thereby that the filter element (8) is enclosed at a spacing by an annular shell (26) of an electrically conductive material and with a sufficiently large free throughflow area and that one pole or, in the case of partial zones electrically insulated relative to one another, several poles of a pulsed high voltage bear against this shell (26).

9. Process for the separation of aerosols, gases and vapours from a gaseous medium with use of a device according to one or more of claims 1 to 8 and for the cleaning of the filter bed, wherein the gaseous medium is led transversely through the filter bed when the filter element is stationary and after a switching off of the feed and the discharge of the gaseous medium a pressure equalisation between the raw gas chamber and the pure gas chamber is produced and the filter element is set into rotation.

## Revendications

1. Dispositif de séparation d'aérosols, de gaz et de vapeurs à partir d'un milieu gazeux, constitué d'un ou plusieurs éléments filtrants (8), disposé à l'intérieur d'un carter (1) subdivisé, au moyen d'une paroi de séparation (2), en une enceinte à gaz bruts (3) et une enceinte à gaz épurés (4), et présentant des paires de parois (9, 10), perforées et disposées à distance les unes des autres, délimitant un lit de filtration (11) statique, annulaire, fermé aux faces frontales, constitué d'un granulat, l'espace intérieur (14) de l'élément filtrant (8) étant relié à l'enceinte à gaz épurés (4), l'élément filtrant (8) étant monté de façon à pouvoir tourner et pourvu d'une tubulure de sortie (15), caractérisé en ce que la tubulure de sortie (15) est guidée de façon étanche, au moyen d'une paroi de séparation (2), entre l'enceinte à gaz bruts (3) et l'enceinte à gaz épurés (4) et en ce que l'étanchéité est assurée par une membrane élastique (17), qui entoure la tubulure de sortie (15) de l'élément filtrant (8) avec un espacement radial et qui s'applique sur une collerette (16) de la tubulure de sortie (15), sous l'effet d'une différence de pression entre l'enceinte à gaz brute (3) et l'enceinte à gaz épurés (4).

2. Dispositif selon la revendication 1, caractérisé en ce que l'élément filtrant (8) est pourvu d'un entraînement (20) motorisé.

3. Dispositif selon la revendication 1, caractérisé en ce que dans l'espace intérieur (14) de l'élément filtrant (8) pénètre un tube d'alimentation (21), destiné à un fluide et pourvu d'une ou plusieurs buses (22), réparties sur la hauteur, dont les axes de sortie sont orientés tangentiellement par rapport au lit de filtration (11).

4. Dispositif selon la revendication 3, caractérisé en ce que dans le tube d'alimentation (21) débouche une soupape (23), et en ce que les tubes d'alimentation (21) de plusieurs éléments filtrants (8) sont raccordés à une pompe (25) commune.

5. Dispositif selon l'une ou plusieurs des revendications 1 à 4, caractérisé en ce que les parois perforées (9, 10) sont perméables aux gaz dans la zone supérieure et en ce que le lit de filtration (11) remplit partiellement la zone perméable aux gaz lorsque l'élément filtrant (8) est à l'arrêt et le remplit en totalité, lorsque cette élément de filtration (8) est en rotation.

6. Dispositif selon l'une ou plusieurs des revendications 1 à 5, caractérisé en ce que, sur la paroi intérieure (9) et la paroi extérieure (10) de l'élément filtrant (8), un pôle haute tension d'un courant cadencé est appliqué.

7. Dispositif selon l'une ou plusieurs des revendications 1 à 5, caractérisé en ce qu'entre la paroi intérieure et la paroi extérieure (9, 10) sont disposés les conducteurs électriques (27), qui sont de polarité identique ou bien alternant selon un ordre de succession quelconque, et en ce que la paroi intérieure et/ou la paroi extérieure (9, 10) sont raccordées à un pôle.

8. Dispositif selon l'une ou plusieurs des revendications 1 à 5, caractérisé en ce que l'élément filtrant (8) est entouré, à distance, par une enveloppe (26) annulaire, constituée d'un matériau conducteur de l'électricité et avec une surface de passage de courant libre suffisamment grande et en ce que, sur cette enveloppe (26), s'appuie un pôle d'une haute tension cadencée ou bien plusieurs pôles lorsqu'il s'agit de zones partielles isolées électriquement les unes par rapport aux autres.

9. Procédé de séparation d'aérosols, de gaz et de vapeurs à partir d'un milieu gazeux, utilisant un dispositif selon l'une ou l'autre ou selon plusieurs des revendications 1 à 8, et caractérisé par le fait que pour opérer l'épuration du lit de filtration, le milieu gazeux est guidé transversalement à travers le lit de filtration lorsque l'élément filtrant est à l'arrêt et, après mise hors service de l'alimentation et de l'évacuation du milieu gazeux, un équilibre de pression est établi entre l'enceinte à gaz bruts et l'enceinte à gaz épurés, l'élément filtrant étant mis en rotation.
